# FASCICULE DE BREVET EUROPEEN

(11) **EP 0 346 200 B1**
(45) Date de publication et mention de la délivrance du brevet: **25.08.1993**
(21) Numéro de dépôt: 89401537.9
(22) Date de dépôt: 05.06.1989
(51) Int. Cl.: C03B 23/03, C03B 35/24, C03B 27/04, C03B 23/035

(54) **Dispositif d'obtention de vitrages bombés**
Vorrichtung zur Herstellung von gebogenen Glasscheiben
Apparatus for producing bent glass sheets

(30) Priorité: 08.06.1988 DE 3819503
(43) Date de publication de la demande: 13.12.1989
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kuster, Hans-Werner, D-5100 Aachen (DE); Vanaschen, Luc, B-4700 Eupen (BE)
(74) Mandataire: Menes, Catherine

(56) Documents cités:
- EP-A- 0 143 691
- US-A- 3 375 093
- US-A- 3 409 422
- US-A- 3 526 490
- US-A- 3 573 022

## Description

L'invention a trait aux techniques de bombage de feuilles de verre en vue de l'obtention de vitrages bombés à courbures complexes bidimensionnelles et éventuellement trempés. Elle concerne plus spécialement une installation de production constituée d'un four traversé par un convoyeur à rouleaux, d'un ensemble de bombage par pressage et d'un dispositif de refroidissement.

Du brevet DE-B-34 38 705, il est connu d'obtenir des vitrages bombés complexes en procédant au chauffage des feuilles de verre planes dans un four que les feuilles traversent convoyées sur un lit de rouleaux dont l'extrémité terminale est constituée d'éléments en forme qui confèrent progressivement une courbure cylindrique à la feuille de verre. Après ce préformage, la feuille de verre est transportée dans une station de bombage par pressage qui comprend une forme de bombage pleine disposée au-dessus des rouleaux du convoyeur et un cadre ouvert en son centre pouvant être abaissé sous la surface portante des rouleaux et au moyen duquel la feuille de verre est pressée contre la forme supérieure pleine. A la suite de ce pressage, la feuille de verre bombée est redéposée sur les rouleaux et conduite à la station de refroidissement, par exemple une station de trempe.

Pour diminuer les défauts optiques générés par l'affaissement du verre chaud entre les rouleaux, il est de plus proposé selon DE-B-34 38 705 de compenser une partie du poids de la feuille de verre par un courant gazeux chaud ascendant, dirigé vers la feuille de verre au travers des rouleaux. Toutefois, on ne peut écarter totalement l'influence négative du soutien non uniforme du verre pendant son préformage. De plus, ce dispositif est relativement onéreux.

D'autre part, il est connu du brevet US-A-3 573 022 de bomber des feuilles de verre en les pressant entre deux formes munies d'orifices par lesquels on injecte de l'air chaud afin d'espacer le verre des formes de bombage puis de l'air froid pour refroidir le verre. Le transfert de la feuille de verre depuis le convoyeur du four jusqu'au-dessous de la forme inférieure est obtenu aux moyens de rouleaux latéraux qui supportent exclusivement deux bords opposés de la feuille de verre et qui peuvent de ce fait être éclipsés lors du pressage. Un tel dispositif présente à nouveau l'inconvénient précité d'un soutien non uniforme du verre avant la phase de pressage, de sorte que la portion centrale non soutenue peut se déformer ce qui génère des défauts optiques. Par ailleurs, les mouvements relatifs entre les formes de bombage et le verre ne peuvent être évités de sorte que ce procédé n'est pas adapté à l'obtention de formes complexes.

L'invention a pour objet un perfectionnement aux installations de production de vitrages bombés complexes en vue de l'obtention de vitrages d'une qualité optique encore améliorée.

Le dispositif d'obtention de vitrages bombés complexes selon l'invention est constitué d'un four, traversé par un convoyeur à rouleaux, servant au réchauffage des feuilles de verre planes en position horizontale jusqu'à leur température de bombage, d'un ensemble de bombage par pressage placé à la suite du four et d'un dispositif de refroidissement, ledit ensemble de bombage par pressage comportant une forme de bombage inférieure mâle, pleine, avec une surface de bombage à courbure bidimensionnelle dont la génératrice la plus haute est dans le plan de transport défini par les rouleaux du convoyeur du four, la paroi de la forme pleine formant la surface de bombage étant munie d'orifices par lesquels s'échappe un gaz chaud sous pression servant à la formation d'un coussin d'air chaud auquel les feuilles de verre planes réchauffées sont transmises par les rouleaux du convoyeur du four, une contre-forme de pressage femelle pouvant être abaissée sur la feuille de verre après le positionnement du verre sur le coussin gazeux chaud.

Selon l'invention, la forme de bombage inférieure est une forme pleine, de sorte que dans la station de bombage la force de pesanteur ne peut pas générer des déformations du verre. De plus, à partir de cette forme pleine est formé un coussin de gaz chaud sur lequel la feuille de verre venant du four est amenée en planant dans sa position nécessaire pour le processus de bombage. Pendant cette phase de positionnement sur le coussin de gaz chaud, il se produit déjà un certain préformage. Le positionnement effectué, c'est-à-dire juste avant la mise en oeuvre de la phase de pressage, l'alimentation en gaz chaud peut être interrompue brièvement afin que la forme supérieure presse la feuille de verre directement contre la forme inférieure pleine.

Le dispositif selon l'invention convient plus particulièrement à la production de feuilles de verre bombées et trempées comportant une partie centrale essentiellement plane et des parties latérales plus ou moins fortement repliées. De tels vitrages sont par exemple destinés à des vitrines d'exposition.

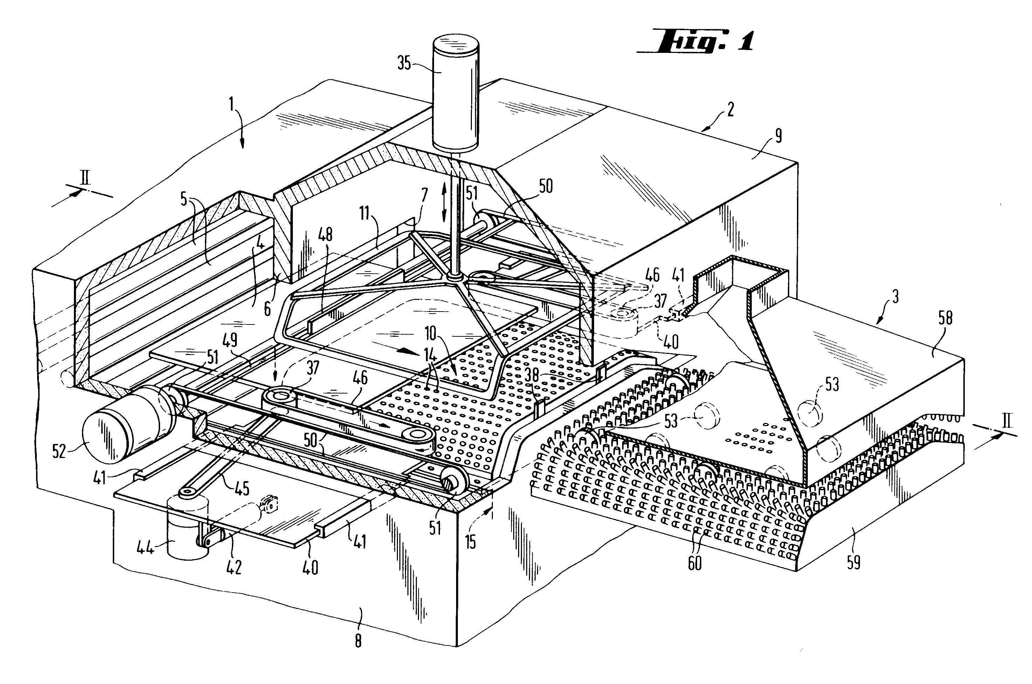

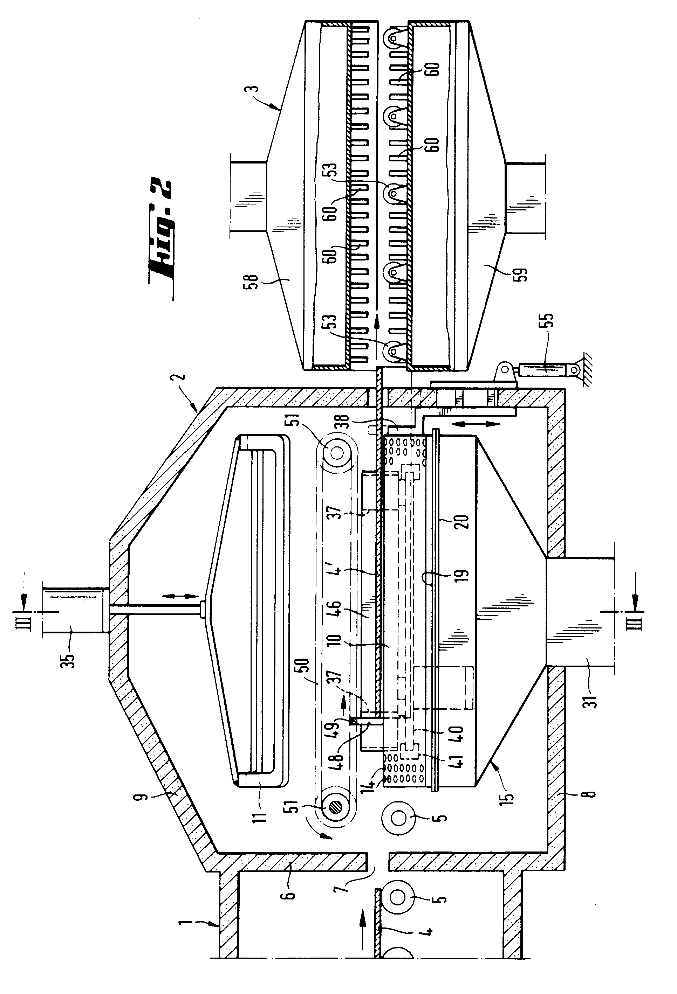

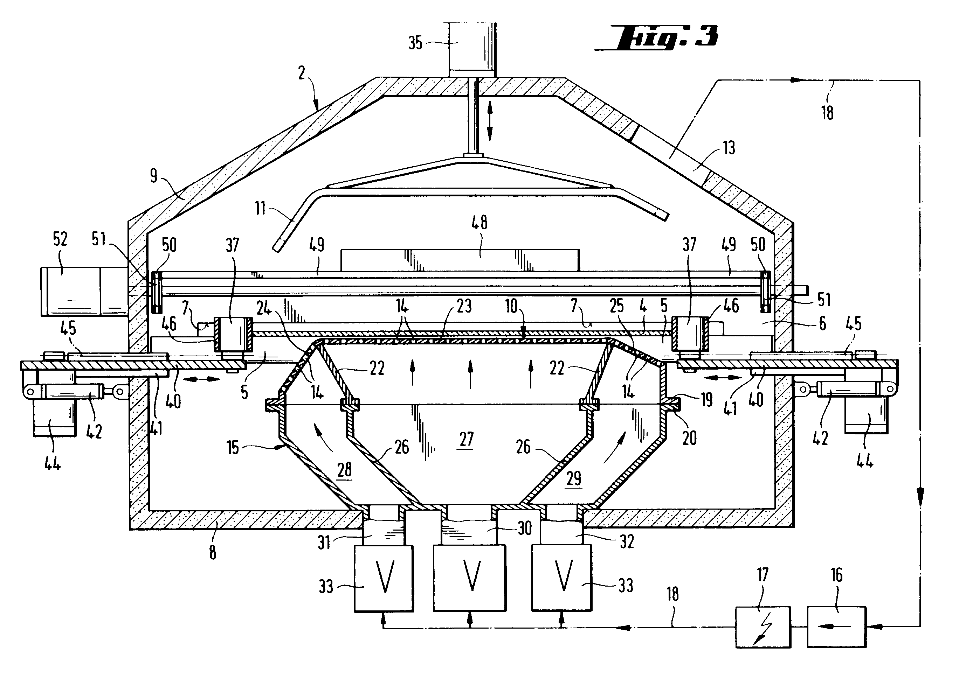

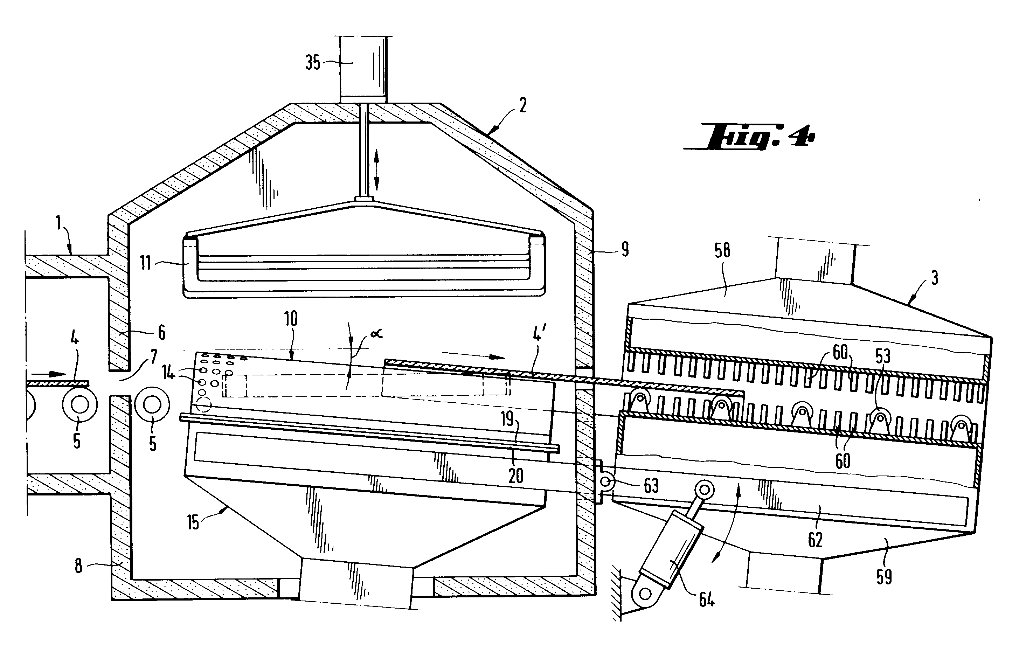

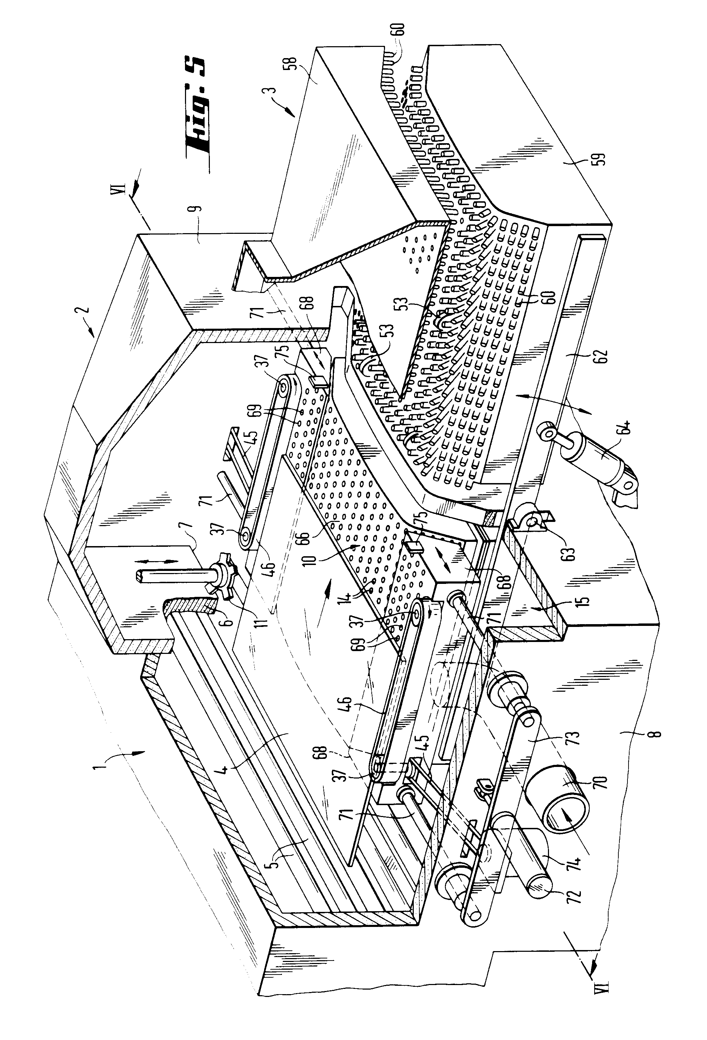

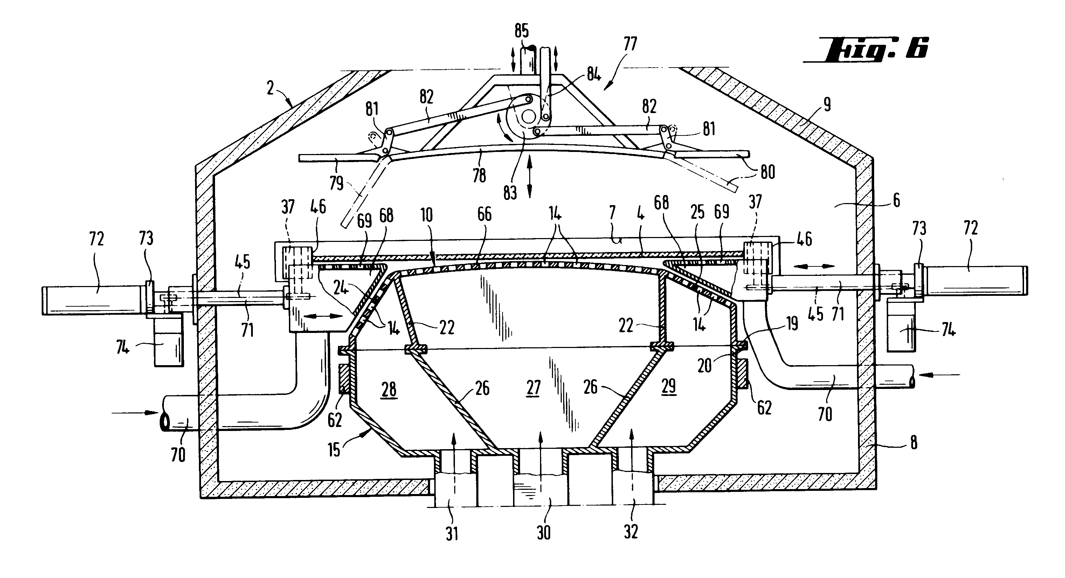

D'autres détails et caractéristiques avantageuses de l'invention ressortent de la description faite ci-après en référence aux dessins annexés qui représentent :
. **figure 1** : une vue d'ensemble en perspective partiellement arrachée d'une installation conforme à un premier mode de réalisation de l'invention,
. **figure 2** **:** une coupe verticale selon la ligne II-II de la figure 1,
. **figure 3** **:** une coupe verticale selon la ligne III-III de la figure 1,
. **figure 4** **:** un dispositif conforme à un autre mode de réalisation de l'invention, vu en coupe,
. **figure 5** **:** une vue d'ensemble en perspective partiellement arrachée d'un dispositif conforme à un troisième mode de réalisation de l'invention,
. **figure 6****:** une section verticale selon la ligne VI-VI de la figure 5.

Comme on peut le voir notamment à la figure 1, l'installation est constituée pour l'essentiel d'un four horizontal 1 muni d'un convoyeur à rouleaux, d'une station de bombage 2 et d'une station de refroidissement 3 qui est une station de trempe dans le cas ici représenté.

Le four 1 est un four horizontal traversant, connu en soi, et servant à échauffer les feuilles de verre 4 jusqu'à la température requise de bombage. Les feuilles de verre 4 sont transportées au travers du four par des rouleaux de transport 5 équipés de systèmes d'entraînement connus. Le four 1 est fermé à une extrémité par une paroi frontale 6 munie d'une ouverture en forme de fente 7 par laquelle les feuilles de verre ressortent du four 1 et pénètrent dans la station de bombage 2.

La station de bombage 2 est directement raccordée au four 1. Les outils de bombage adéquats sont disposés dans un bâti fermé constitué d'un élément inférieur 8 et d'un élément supérieur 9. La forme de bombage mâle 10 est placée dans le bâti inférieur 8, tandis que la forme de bombage femelle constituée par un cadre 11 est placée dans le bâti supérieur 9.

La forme de bombage mâle 10 est une forme pleine dont la surface est définie par l'enveloppe du volume déterminé par l'intersection d'un cylindre avec deux plans parallèles au plan médian dudit cylindre. Les directrices du cylindre correspondent à la courbure transversale que l'on souhaite conférer à la feuille de verre, les génératrices de la surface cylindrique sont parallèles à l'axe longitudinal de l'installation, c'est-à-dire à la direction de transport des feuilles de verre. La partie centrale de la forme 10 ainsi définie est plane. La forme de bombage 10 est disposée à une hauteur telle que les génératrices de la partie centrale soient situées dans le plan de transport définis par les rouleaux 5.

Comme il ressort plus spécialement des figures 2 et 3, la forme pleine 10 est constituée par une plaque métallique munie d'une pluralité d'ouvertures 14. La forme 10 constitue le capot d'une chambre fermée 15 dans laquelle est introduite un gaz chaud sous pression. Le gaz chaud, dont la température avoisine la température des feuilles de verre 4, s'échappe par les ouvertures 14 et forme un coussin gazeux sur lequel la feuille 4 flotte sans venir en contact avec la surface de la forme 10. Un ventilateur 16 sert à la production du volume de gaz chaud nécessaire. Un ensemble de chauffage 17 est prévu pour échauffer le gaz à la température requise. Le gaz chaud est soutiré par l'ouverture 13 ménagée dans le bâti supérieur 9 et est recyclé par la canalisation 18 qui le ramène à la chambre pressurisée 15.

La forme de bombage 10 est munie dans sa partie inférieure d'une bride 19 au moyen de laquelle la forme 10 est fixée de façon amovible par une bride correspondante 20 au bâti de la chambre pressurisée 15. De cette manière, la forme pleine 10 peut être remplacée aisément.

Comme il est visible figure 3, il peut être intéressant de cloisonner la chambre pressurisée 15 afin d'associer à la partie centrale 23 et aux parties latérales 24, 25 de la forme 10, leurs propres caissons ; la pression et le volume du courant gazeux dans chaque caisson pouvant être le cas échéant régulés indépendamment. Ce cloisonnement peut être obtenu au moyen de parois 22 associées à la forme 10 et se prolongeant par des parois 26 solidaires du bâti de la chambre 15 ce qui délimite ici trois caissons pressurisés 27, 28, 29 respectivement alimentés par des conduites 30, 31, 32 recevant les gaz chauds sous pression soufflés par des ventilateurs régulés 33.

Le cadre de bombage 11 disposé dans le bâti supérieur 9 peut être soulevé et abaissé au moyen d'un vérin 35 hydraulique ou pneumatique ou de tout autre mécanisme élévateur équivalent.

A côté de la forme inférieure 10 sont disposés des rouleaux 37 de guidage de la feuille de verre 4. Ces rouleaux 37 servent à maintenir correcte la position de la feuille de verre 4 par rapport à l'axe de la ligne que ce soit pendant son trajet du four à la station de bombage que lors de son positionnement dans la station de bombage. En plus du dispositif 37 de positionnement latéral est prévu un dispositif de positionnement frontal constitué par une butée 38 qui peut être abaissée sous le plan de transport.

Les rouleaux de guidage 37 sont fixés sur une tablette 40 qui coulisse perpendiculairement à la direction d'avancée du verre sur des rails 41. La tablette 40 est positionnée au moyen d'un vérin hydraulique 42 ou tout autre mécanisme moteur équivalent.

Sur la partie de la tablette 40 sortant hors du bâti 8 est fixé un moteur électrique 44 qui par l'intermédiaire d'une courroie ou d'une chaîne 45, entraîne un rouleau 37 tournant autour d'un axe vertical. Les deux rouleaux 37 entraînent une bande sans fin 46 faite dans une matière supportant des température élevées et qui de cette manière est entraînée selon une vitesse réglable via la courroie 45. Par le contact avec les côtés de la feuille 4, la bande 46 sert éventuellement au déplacement et systématiquement au guidage latéral de la feuille de verre 4 sur son trajet du four 1 à la station de bombage 2 et lors de son positionnement final. Le même ensemble de deux rouleaux 37 et d'une bande 46 se retrouve de l'autre côté de la station de bombage.

La station de bombage 2 comporte en outre un dispositif de transport qui conduit les feuilles de verre 4 dans la station de refroidissement 3 après l'achèvement du processus de bombage. Dans le cas ici représenté, ce dispositif de transport se compose d'un coulisseau 48 fixé à une tige 49 pour sa part fixée par ses deux extrémités à des chaînes sans fin 50. Les chaînes sans fin 50 sont posées à distance de la forme de bombage sur des roues à chaîne 51, au-dessus du plan de transport des feuilles de verre et ceci à une hauteur telle que le coulisseau 48 appuie sur le bord arrière de la feuille 4 lorsque la tige 49 se trouve sur les brins inférieurs des chaînes 50. Les chaînes 50, et avec elles le coulisseau 48, sont entraînées par le moteur 52 de façon à ce que le coulisseau 48 fasse coulisser les feuilles de verre bombées 4′ de la station de bombage 2 à la station de refroidissement 3. Dans cette dernière, le transport des feuilles de verre s'effectue sur des rouleaux moteurs 53. Lorsque la tige 49 arrive à l'extrémité des brins inférieurs des chaînes 50, elle retourne sur les brins supérieurs en direction de sa position de départ située à l'extérieur de la chambre de bombage qui doit être libérée pour l'exécution du processus de pressage par le cadre 11.

Un cycle de bombage se déroule de la façon suivante : dès que le bord avant d'une feuille 4, échauffée dans le four 1 à la température de bombage, pénètre dans la station de bombage et se rapproche de la forme de bombage inférieure 10, le ventilateur 16 est mis en route grâce à un circuit de commande ici non représenté, de sorte que la forme de bombage perforée 10 agisse par dessous avec l'air chaud. Le gaz chaud sortant par les ouvertures 14 forme, entre la forme de bombage 10 et la feuille de verre 4, un coussin de gaz chaud sur lequel la feuille 4 atteint sa position finale en raison de l'énergie due à sa vitesse ou si nécessaire en raison de la force communiquée par le frottement contre la bande d'entraînement 46. La position finale est définie latéralement par les rouleaux 37 et la bande 46 et dans la direction du mouvement par la butée frontale 38. Dès que la feuille a atteint sa position finale, on interrompt le courant de gaz chaud de sorte que la feuille de verre 4 appuie sur la forme de bombage 10. Le cadre de bombage 11 est abaissé au moyen du vérin 35 et presse la feuille 4 contre la forme pleine 10. Grâce au vérin pneumatique 55, la butée frontale 38 est abaissée pour laisser passer la feuille bombée 4′ vers la station de refroidissement. Le vérin 35 ramène alors le cadre 11 dans sa position haute. Après que la trajectoire du coulisseau 48 ait été libérée par le cadre de bombage 11, on met en route le moteur 52 qui ramène le coulisseau 48 en position de travail. Simultanément, le ventilateur 16 est remis en route afin de reconstituer le coussin de gaz chaud entre la feuille de verre bombée 4′ et la forme pleine de bombage 10. Planant sur ce coussin de gaz chaud, la feuille de verre est poussée par le coulisseau 48 dans la station de refroidissement 3 où, de manière connue, le verre est intensément refroidi par de l'air froid émis par des buses 60 des caissons de soufflage 58, 59 et est ainsi trempé.

Les figures 4 et 5 représentent une autre possibilité pour transférer la feuille de verre bombée 4′ de la station de bombage 2 à la station de refroidissement 3. Dans ce cas, la forme de bombage 10, y compris la chambre pressurisée 15, et les deux caissons de soufflage 58, 59 sont fixés à un cadre porteur commun 62. Le cadre porteur 62 est articulé autour d'un axe horizontal 63 et peut être incliné selon un angle "α" grâce à un vérin hydraulique ou pneumatique 64. Quand la feuille de verre 4 pénètre depuis le four 1 dans la station de bombage 2, le cadre porteur 62 se trouve en position initiale, horizontale. Conformément au mode opératoire décrit précédemment, dès que la feuille de verre 4 a atteint sa position finale sur la forme de bombage 10, elle est bombée à l'aide du cadre 11. Le processus de bombage terminé et le cadre 11 ramené en position supérieure, la chambre pressurisée 15 est à nouveau alimentée en gaz chaud sous pression. La feuille de verre bombée 4′ se détache de la surface en forme et il se forme un coussin de gaz chaud sur lequel la feuille de verre 4′ plane. A la suite de quoi, le vérin 64 est mis en action et le cadre porteur 62 est grâce à lui incliné de l'angle "α". Sous l'effet de son propre poids, la feuille de verre 4′ glisse alors vers la station de refroidissement où elle est prise en charge par les rouleaux 53 qui la conduisent vers une station de déchargement non représentée.

Dans l'installation représentée aux figures 5 et 6, la forme de bombage inférieure 10 avec la chambre pressurisée 15 et les deux caissons de soufflage 58, 59 sont à nouveau montés sur un cadre porteur commun 62 articulé autour d'un axe 63 grâce à un vérin 64 servant pour le transfert de la feuille de verre 4′ de la station de bombage 2 à la station de refroidissement 3 à la suite du processus de bombage. Dans cette réalisation, la partie centrale 66 de la forme de bombage 10 n'est pas plane mais est légèrement bombée selon une courbure cylindrique. Au-dessus des parties latérales de la forme de bombage 10 inclinées vers le bas, la feuille de verre est dans ce cas soutenue par des dispositifs supplémentaires de soutien 68 par coussins gazeux. Ces dispositifs de soutien 68 sont constitués par des chambres pressurisées, adaptées à la géométrie de la forme de bombage 10, dont les faces supérieures sont planes et présentent des ouvertures 69 par lesquelles le gaz chaud s'échappe pour la formation des coussins de gaz chaud. Les dispositifs de soutien 68 sont alimentés en gaz chaud sous pression par des canalisations 70. Ils sont fixés à des barres 71 montées de façon coulissante et sont mis en action par un vérin 72 qui opère sur les deux barres 71 via une bride de liaison 73. Lorsque la feuille 4 quitte le four 1 et pénètre dans la station de bombage 2, le dispositif de soutien 68 est amené dans la position de travail représentée sur les figures à l'aide du vérin 72. Dès que la feuille 4 a atteint sa position finale dans la station de bombage, on retire les deux dispositifs de soutien 68 grâce au vérin 72, de sorte que la feuille de verre appuie sur la forme de bombage 10 tout d'abord sous l'effet de son poids puis sous l'action du cadre de pressage 11.

Sur chaque dispositif de soutien 68 sont posés deux rouleaux de guidage 37 entre lesquels la bande flexible 46 défile. Un des rouleaux 37 est mû par le moteur 74 par l'intermédiaire d'une courroie d'entraînement 45. Le moteur 74 est pour sa part disposé sur la bride de liaison 73. De cette manière, les parties latérales de la feuille de verre sont soutenues par le bas grâce aux dispositifs de soutien décrits, simultanément sont guidées par les côtés, éventuellement transportées par friction sur bande 46 et sont amenées dans la position finale définie par les butées 75.

Lorsque les extrémités latérales de la feuille de verre 4 doivent être fortement bombées, il est recommandé d'utiliser un cadre de bombage formé d'une pluralité d'éléments articulés entre eux comme montré à la figure 6. Le cadre de bombage 77 est constitué d'un élément central 78 et de deux éléments latéraux 79, 80 fixés par des articulations à l'élément central 78. Les éléments latéraux 79, 80 sont munis chacun d'un bras de levier 81 fixé à une bielle 82. Les deux bielles 82 sont articulées pour leur part à une manivelle 83 mue par une bielle 84. Les deux éléments latéraux 79, 80 du cadre 77 sont basculés vers le bas à l'aide de la bielle 84 dès que le cadre 77 est abaissé sur la feuille de verre reposant sur la forme inférieure de bombage 10, au moyen de la bielle 85 mue par un piston ici non représenté.

## Revendications

1. Dispositif d'obtention de vitrages bombés complexes et éventuellement trempés constitué d'un four (1) traversé par un convoyeur à rouleaux, réchauffant les feuilles de verre planes (4) en position horizontale, jusqu'à leur température de bombage ; d'un ensemble de bombage par pressage (2) placé à la suite du four et d'un dispositif de refroidissement (3), **caractérisé en ce que** l'ensemble de bombage par pressage (2) comporte une forme de bombage (10) inférieure mâle, pleine, avec une surface de bombage à courbure bidimensionnelle dont la génératrice la plus haute est dans le plan de transport défini par les rouleaux (5) du convoyeur du four (1), la paroi de la forme pleine (10) formant la surface de bombage étant munie d'orifices (14) par lesquels s'échappe un gaz chaud sous pression servant à la formation d'un coussin de gaz chaud auquel les feuilles de verre planes (4) réchauffées sont transmises par les rouleaux du convoyeur du four (1) et une contre-forme de pressage femelle (11) qui peut être abaissée sur la feuille de verre (4) après le positionnement de la feuille de verre (4) sur le coussin gazeux chaud.

2. Dispositif selon la revendication 1, **caractérisé en ce qu**'il comporte un dispositif (16) pour interrompre lors du pressage le courant gazeux chaud servant à la formation du coussin de gaz chaud sur la forme de bombage pleine (10).

3. Dispositif selon la revendication 1 ou 2, **caractérisé en ce qu**'il est prévu - en tant que dispositif de transport pour mener le feuille de verre bombée (4') vers la station de refroidissement (3) - un coulisseau (48) poussant le bord arrière de la feuille de verre (4') et placé dans sa position de repos hors du plan de transport.

4. Dispositif selon la revendication 1 ou 2, **caractérisé en ce que** la station de refroidissement (3) est constituée par des caissons de soufflage de trempe (58, 59) **et en ce que** le dispositif de transport pour mener la feuille de verre bombée (4') vers la station de refroidissement (3), est constitué par un cadre (62) pouvant être incliné d'un angle ( ) par rapport à l'horizontale, sur lequel sont disposés la forme de bombage (10) et les caissons de soufflage (58, 59) de sorte que la feuille de verre bombée (4') puisse glisser sous l'effet de son propre poids sur le plan de transport incliné.

5. Dispositif selon l'une des revendications 1 à 4, **caractérisé en ce que** sont prévus des éléments de guidage (37, 46) pour guider et positionner les feuilles de verre chaudes, situés à la hauteur de plan de transport des feuilles de verre, placée de chaque côté de la forme pleine (10).

6. Dispositif selon la revendication 5**, caractérisé en ce que** les éléments de guidage (37, 46) sont montés sur une tablette (40) coulissant dans une direction perpendiculaire à la direction de transport des feuilles de verre.

7. Dispositif selon la revendication 5 ou 6, **caractérisé en ce que** lesdits éléments de guidage sont constitués de chaque côté de la forme (10) par deux rouleaux (37) tournant autour de leurs axes verticaux de révolution et de bandes flexibles sans fin (46) faites dans une matière supportant des températures élevées et entraînées par deux rouleaux (37).

8. Dispositif selon la revendication 7, **caractérisé** en **ce que** de chaque côté de la forme (10) un des deux rouleaux (37) est mû par un moteur (44).

9. Dispositif selon l'une ou plusieurs des revendications 1 à 8, **caractérisé en ce que** la forme de bombage inférieure pleine (10) est fixée de façon amovible à une chambre pressurisée (15).

10. Dispositif selon l'une ou plusieurs des revendications 1 à 9, **caractérisé en ce que** la chambre pressurisée (15) est cloisonnée pour former des caissons pressurisés (27, 28, 29) associés aux différentes parties (23, 24, 25) de la forme de bombage (10).

11. Dispositif selon l'une ou plusieurs des revendications 1 à 10, **caractérisé en ce que** dans la station de bombage (2), au-dessus des parties latérales de la forme de bombage (10) inclinées vers le bas, sont prévus des dispositifs de soutien (68) par coussin gazeux, susceptibles d'être déplacés latéralement, dont la surface supérieure est plane et située dans le plan de transport des feuilles de verre (4).

12. Application du dispositif selon l'une ou plusieurs des revendications précédentes à la réalisation de vitrines d'exposition en verre trempé.

## Claims

1. Device for the production of complex curved panes, possibly also toughened, the device being constituted of a furnace (1) through which a roller conveyor passes, heating the flat glass sheets (4) in a horizontal position up to their bending temperature, of an assembly for bending by pressing (2), situated after the furnace, and of a cooling device (3), characterized in that the bending by pressing assembly (2) comprises a lower solid, male bending mould (10) having a bending surface with two-dimensional curvature, the highest generatrix of which lies in the conveying plane defined by the rollers (5) of the conveyor of the furnace (1), the wall of the solid mould (10) forming the bending surface being provided with orifices (14), through which a hot pressurized gas serving for forming a hot gas cushion escapes, to which the heated flat glass sheets (4) are transferred by the rollers of the conveyor of the furnace (1), and a female pressing counter-mould (11), which can be lowered onto the glass sheet (4) after the glass sheet (4) has been positioned on the hot gas cushion.

2. Device according to Claim 1, characterized in that it comprises a device (16) for interrupting, during the pressing, the hot gas flow serving for forming the hot gas cushion on the solid bending mould (10).

3. Device according to Claim 1 or 2, characterized in that there is provided, as transporting device for bringing the curved glass sheet (4') to the cooling station (3), a slider (48) pushing the rear edge of the glass sheet (4') and situated, in its at-rest position, outside the conveying plane.

4. Device according to Claim 1 or 2, characterized in that the cooling station (3) is constituted of toughening blowing boxes (58, 59), and in that the transporting device for bringing the curved glass sheet (4') to the cooling station (3) is constituted of a frame (62), capable of being inclined at an angle (α) to the horizontal, on which are disposed the bending mould (10) and the blowing boxes (58, 59), so that the bent glass sheet (4') can slide under its own weight on the inclined conveying plane.

5. Device according to one of Claims 1 to 4, characterized in that guide elements (37, 46) are provided for guiding and positioning the hot glass sheets, these guide elements being situated at the level of the conveying plane for the glass sheets, and placed on either side of the solid mould (10).

6. Device according to Claim 5, characterized in that the guide elements (37, 46) are mounted on a table (40) sliding in a direction perpendicular to the direction of conveying of the glass sheets.

7. Device according to Claim 5 or 6, characterized in that said guide elements are constituted, on each side of the mould (10), of two rollers (37) revolving about their vertical axes of revolution, and of endless flexible belts (46) made of a material resistant to high temperatures and driven by two rollers (37).

8. Device according to Claim 7, characterized in that, on each side of the mould (10), one of the two rollers (37) is driven by a motor (44).

9. Device according to one or more of Claims 1 to 8, characterized in that the solid lower bending mould (10) is fixed in detachable manner to a pressurized chamber (15).

10. Device according to one or more of Claims 1 to 9, characterized in that the pressurized chamber (15) is partitioned to form pressurized boxes (27, 28, 29) associated with the different parts (23, 24, 25) of the bending mould (10).

11. Device according to one or more of Claims 1 to 10, characterized in that, in the bending station (2), above the downwardly inclined lateral parts of the bending mould (10), there are provided support devices (68) operating by gas cushions, capable of being displaced laterally, the upper surface of which is flat and is situated in the conveying plane for the glass sheets (4).

12. Application of the device according to one or more of the preceding Claims to the production of display windows in toughened glass.

## Patentansprüche

1. Vorrichtung zum Herstellen gebogener und gegebenenfalls vorgespannter Glasscheiben, bestehend aus einem Rollenofen (1), der die ebenen Glasscheiben (4) in horizontaler Lage auf ihre Biegetemperatur erwärmt, einem sich an den Ofen anschließenden Preßbiegeaggregat (2) und einer Kühleinrichtung (3), **dadurch gekennzeichnet**, daß das Preßbiegeaggregat (2) eine untere patrizenartige vollflächige Biegeform (10) mit zweidimensional geformter Biegefläche umfasst, deren oberste Mantellinie in der durch die Transportrollen (5) des Rollenofens (1) bestimmten Transportebene liegt, und daß die die Biegefläche bildende Wand der vollflächigen Biegeform (10) mit Öffnungen (14) versehen ist, durch die heißes Gas unter Überdruck entweicht und zur Bildung eines heißen Gaskissens dient und auf die die erwärmten ebenen Glasscheiben (4) durch die Transportrollen des Ofens aufgeschoben werden, sowie eine matrizenartige Biegeform (11) die nach der Positionierung der Glasscheibe (4) auf dem Heißgaskissen auf die Glasscheibe (4) abgesenkt werden kann.

2. Vorrichtung nach Anspruch 1, dadurch gekennzeichnet, daß sie eine Vorrichtung (16) zur Unterbrechung des das heiße Gaskissen über der vollflächigen Biegeform (10) bildenden heißen Gasstroms während des Preßvorgangs umfaßt.

3. Vorrichtung nach Anspruch 1 oder 2, dadurch gekennzeichnet, daß als Transportvorrichtung zum Überführen der gebogenen Glasscheibe (4') in die Kühlstation (3) ein die gebogene Glasscheibe (4') an ihrer hinteren Kante angreifender angetriebener Schieber (48) vorgesehen ist, der sich in seiner Ruhestellung außerhalb der Transportebene befindet.

4. Vorrichtung nach Anspruch 1 oder 2, dadurch gekennzeichnet, daß die Kühlstation (3) aus Vorspannblaskästen (58,59) besteht, und daß die Transportvorrichtung zum Überführen der gebogenen Glasscheibe (4') in die Kühlstation (3) aus einem um ein vorgegebenes Winkelmaß (α) gegen die Horizontale kippbaren Rahmen (62) besteht, auf dem die untere vollflächige Biegeform (10) und die Blaskästen (58, 59) angeordnet sind, so daß die gebogene Glasscheibe (4') unter der Wirkung ihres Eigengewichts auf der geneigten Transportebene gleitet.

5. Vorrichtung nach einem der Ansprüche 1 bis 4, dadurch gekennzeichnet, daß auf jeder Seite der vollflächigen Biegeform (10) in Höhe der Transportebene der Glasscheiben Führungselemente (37,46) zum Führen und Positionieren der erwärmten Glasscheiben vorgesehen sind.

6. Vorrichtung nach Anspruch 5, dadurch gekennzeichnet, daß die Führungselemente (37,46) auf einem Schritten (40) quer zur Transportrichtung der Glasscheiben verschiebbar angeordnet sind.

7. Vorrichtung nach Anspruch 5 oder 6, dadurch gekennzeichnet, daß die genannten Führungselemente an jeder Seite der patrizenförmigen Biegeform (10) aus zwei jeweils um eine senkrechte Achse drehbar gelagerten Rollen (37) und aus durch diese Rollen (37) angetriebenen endlosen flexiblen Bändern (46) aus hitzebeständigem Material bestehen.

8. Vorrichtung nach Anspruch 7, dadurch gekennzeichnet, daß aufjeder Seite der Biegeform (10) eine der beiden Rollen (37) durch einen Motor (44) angetrieben wird.

9. Vorrichtung nach einem oder mehreren der Ansprüche 1 bis 8, dadurch gekennzeichnet, daß die untere, vollflächige Biegeform (10) mit einer Druckkammer (15) auswechselbar verbunden ist.

10. Vorrichtung nach einem oder mehreren der Ansprüche 1 bis 9 , dadurch gekennzeichnet, daß die Druckkammer (15) in einzelne Druckkammern (27,28,29) aufgeteilt ist, die den Teilfeldern (23,24,25) der Biegeform (10) zugeordnet sind.

11. Vorrichtung nach einem oder mehreren der Ansprüche 1 bis 10, dadurch gekennzeichnet, daß in der Biegestation (2) oberhalb der nach unten abgewinkelten Seitenbereiche der Biegeform (10) seitlich verfahrbare Gaskissen-Stützvorrichtungen (68) vorgesehen sind, deren obere Oberfläche jeweils eben ist und in der Transportebene der Glasscheibe (4) liegt.

12. Anwendung der Vorrichtung nach einem oder mehreren der vorangehenden Ansprüche zur Herstellung von Ausstellungsvitrinen aus vorgespanntem Glas.
